# EUROPÄISCHE PATENTANMELDUNG

(11) **EP 1 384 994 A1**
(43) Veröffentlichungstag der Anmeldung: **28.01.2004**
(21) Anmeldenummer: 03076933.5
(22) Anmeldetag: 23.06.2003
(51) Int. Cl.: G01N 27/447

(54) **Verfahren und Vorrichtung zum Lokalisieren und Ausschneiden von Anreicherungen in einem Gel**

(30) Priorität: 23.07.2002 EP 02078009
(71) Anmelder: F.HOFFMANN-LA ROCHE AG, 4070 Basel (CH)
(72) Erfinder: Hochstrasser, Remo Anton, 4104 Oberwil (CH); Langen, Hanno, 79585 Steinen (DE)
(74) Vertreter: Ventocilla, Abraham

(57) **Zusammenfassung**

Für das Abtrennen von Gelstücken aus einem Gelausschnitt (27) ist es nötig, zunächst die Position des Gelstückes zu bestimmen, z.B. mit einem Scanner, und nach einer oft Stunden betragenden Unterbrechung die Gelstücke aus dem Gelausschnitt (27) auszustechen. Der Gelausschnitt (27) muss während dieser Unterbrechung ausdehnungs- und positionsstabil in einem Gelhalter (21) gelagert werden. Dafür wird der Gelausschnitt (27) im Gelhalter schwimmend in einer Äquilibrierflüssigkeit (31) gehalten. Die Äquilibrierflüssigkeit bewirkt, dass sich die Abmessungen des Gelausschnittes während der Unterbrechung nicht verändern. Relativ zum Gelhalter (21) kann der Gelausschnitt (27) einmal dadurch positioniert werden, dass es exakt passend in einer Kammer (24) des Gelhalters (21) , gegebenenfalls mit leichtem Übermass ausgeschnitten wird, und/oder im Randbereich, der für die Auswertung regelmässig unbedeutend ist, durch eine Klemmvorrichtung festgehalten wird. Das Abtrennen von Gelstücken aus dem Gelausschnitt (27) kann bei dieser Art der Halterung auf einfacher Weise mittels eines rohrförmigen Entnahmemittels erfolgen, das durch das Gel hindurchgetrieben wird, da der Gelausschnitt nicht flächig mit dem Gelhalter (21) verbunden ist, sondern vielmehr auf einer dünnen Schicht Äquilibrierflüssigkeit (31) schwimmt.

## Beschreibung

Die Erfindung bezieht sich auf ein Verfahren zum Positionieren eines Gels gemäss Oberbegriff des Anspruchs 1. Des Weiteren bezieht sie sich auf Vorrichtungen zur Durchführung des Verfahrens und auf Vorrichtungen zum Entnehmen von Gelstücken aus einem positionierten Gel gemäss Oberbegriffen der unabhängigen Vorrichtungsansprüche.

Insbesondere in der Biotechnologie werden Substanzen in Substanzgemischen oft dadurch getrennt, dass ihre unterschiedliche Wanderungsgeschwindigkeit in Gelen ausgenutzt wird, z.B. durch Chromatographie oder Elektrophorese. Das Resultat einer solchen Trennung liegt in Form einer ein- oder zweidimensionalen Verteilung von Anreicherungspunkten der Substanzen in einer Gelschicht vor. Die Anreicherungspunkte werden durch geeignete Verfahren markiert, z.B. gefärbt für eine optische Erkennung. Ein gängiger Farbstoff hierfür ist "Coomassie Blue". Nach Ermittlung der Positionen der Anreicherungspunkte im Gel werden aus dem Gel die Gelstücke entnommen, in denen die Anreicherungspunkte liegen und weiteren Analysen- oder Verarbeitungsschritten zugeführt.

Mit dem zunehmenden Bedarf, Verfahren dieser Art durchzuführen, ergibt sich die Notwendigkeit, die Durchführung dieser Verfahren zu automatisieren. Unter anderem wurden dazu computerisierte Verfahren zur Ermittlung definierter Anreicherungspunkte entwickelt und Roboter zum Ausstechen von Gelstücken. Ein solches Verfahren und eine Vorrichtung dazu sind aus der WO-A-98/23950 bekannt. Dabei wird das Gel auf einem dimensionsstabilen Träger aufgebracht. In einem Beispiel wird dafür eine Glasplatte eingesetzt, deren Oberfläche mittels einer Verbindungsschicht (bifunctional linker) funktionalisiert ist. Beim Aufbringen des Gels auf der Glasplatte bilden sich kovalente Bindungen heraus, die das Gel unverrückbar auf der Glasoberfläche festhalten.
In einem ersten Schritt werden die Anreicherungspunkte durch Einfärben markiert. Anschliessend werden nach Vorgabe des Benutzers die auszuschneidenden Gelstücke mittels eines Computers elektronisch erfasst. Danach wird die Gelplatte in einen Ausstechroboter (so genannten "Gelpicker") überführt, der die im ersten Schritt definierten Gelstücke heraussticht und in Probegefässe, z.B. die Kavitäten (wells) einer Mikrotiterplatte überführt. Wegen der Fixierung des Gels auf dem Träger kann dabei zwischen dem ersten Schritt, dem Einfarben, und dem zweiten Schritt, dem Ausstechen, eine beträchtliche Zeitspanne vergehen, ohne dass merkliche Abweichungen der Positionen der auszuschneidenden Gelstücke auftreten und das beabsichtigte Ausstechen der Gelstücke beeinträchtigen, welche die Anreicherungspunkte enthalten.

Nachteilig bei diesem Verfahren ist jedoch gerade die feste Bindung des Gels an den Träger. Dadurch ist es nötig, beim Ausstechen mit einem hohlnadelförmigen Instrument bis zum Aufsetzen des Instruments auf den Träger durch das Gel hindurchzustechen und danach durch eine seitliche Bewegung oder eine sonstige Massnahme das Gel vom Träger abzuschneiden oder abzuscheren. Wird das Ausstechinstrument dann angehoben, so ist auch die Unterseite des Gels direkt der Umgebung ausgesetzt, was zu unerwünschten Reaktionen, z.B. einer Oxidation, führen kann, wenn nicht besondere, aufwendige Vorkehrungen getroffen werden.

Nachteilig beim Verfahren gemäss der WO-A-98/23950 ist ausserdem, dass beim Abtrennen des Gels vom Träger Bestandteile der Verbindungsschicht am Gel haften bleiben und danach bei den weiteren Analyseschritten als Verunreinigung wirken.

Der Erfindung liegt die Aufgabe zugrunde, ein Verfahren zum Positionieren eines Gelstückes in einem Halter für eine längere Zeit anzugeben, mit dem die oben erwähnten Nachteile beseitigt werden, wobei aber die räumliche Verteilung der Anreicherungspunkte über längere Zeit unverändert bleiben soll.

Ein solches erfindungsgemässes Verfahren ist durch Anspruch 1 definiert. Die weiteren Ansprüche definieren bevorzugte Ausführungsformen, Vorrichtungen zur Durchführung des Verfahrens, Verfahren zum Heraustrennen von Gelstücken aus einer erfindungsgemäss positionierten Gelschicht sowie Vorrichtungen dazu.

Erfindungsgemäss wird ein Gelausschnitt in einen Halter eingelegt und mit Äquilibrierflüssigkeit bedeckt. Die Bedeckung des Gelausschnitts mit der Äquilibrierflüssigkeit ermöglicht, das Einstellen eines Gleichgewichts-Quellungsgrades zu erreichen und dadurch sicher zu stellen, dass die Abmessungen des Gelausschnitts und dadurch die räumliche Verteilung der Anreicherungspunkte über längerer Zeit, z.B. über acht oder mehr Stunden, unverändert bleibt. Dies ermöglicht eine treffsichere Entnahme von Gelstücken aus vermessenen Anreicherungspunkten im Gelausschnitt, obwohl das ganze Verfahren vom Vermessen der Lage der Anreicherungspunkte bis zur Entnahme der dort liegenden Gelstücke über längere Zeit erfolgt und mehrere Stunden in Anspruch nehmen kann.

Gegenüber dem Stand der Technik gemäss der WO 98/23950 bieten die erfindungsgemässen Verfahren und Vorrichtungen Vorteile beim Arbeitsablauf und eine höhere Flexibilität bei der Markierung/Anfärbung (Absorption, Fluoreszenz, Radioaktivität, etc.). Die anmeldungsgemässe Vorrichtung arbeitet schneller als die Vorrichtung gemäss der WO 98/23950, weil die Vorrichtung zur Entnahme von Gelstücken nur an vorgegebenen Orte angefahren wird, ohne zuerst für jeden Ort einen Detektionsschritt zu benötigen, bei dem es detektiert und mittels geeignete Software entschieden werden muss, ob an dem Ort eine Probe entnommen werden soll oder nicht.

Weitere Vorteile und Eigenschaften von erfindungsgemässen Verfahren und Vorrichtungen gehen aus der nachstehenden Beschreibung von Ausführungsbeispielen anhand der beiliegenden Zeichnungen hervor. Es zeigen
- Fig. 1: eine Draufsicht eines Gelschneiders 11,
- Fig. 2: einen Querschnitt des Gelschneiders 11 gemäss Linie A-A in Fig. 1,
- Fig. 3: eine Draufsicht eines Gelauschnitts 27,
- Fig. 4: einen Querschnitt der Bestandsteile eines Gelhalters 21,
- Fig. 5: einen Querschnitt durch den Gelhalter 21 gemäss Fig. 4 mit einem darin angeordneten Gelauschnitt 27,
- Fig. 6: einen Querschnitt durch den Gelhalter 21 gemäss Fig. 4 mit einem etwas kleineren Gelauschnitt als in Fig. 5;
- Fig. 7: eine perspektivische Ansicht eines Ausstechroboters 41,
- Fig. 8: eine perspektivische Ansicht eines Ausstechwerkzeugs 51,
- Fig. 9: eine Explosionsdarstellung des Ausstechwerkzeugs 51 in Fig. 8.

| **Bezugszeichenliste** | |
|---|---|
| 11 | Gelschneider |
| 12 | Grundplatte |
| 13 | Erhebung |
| 14 | Seitenwand |
| 15 | Ecken |
| 16 | Messerband |
| 17 | Schrauben |
| 18 | Schneidekante des Gelschneiders 11 |
| 19 | |
| 20 | |
| 21 | Gelhalter |
| 22 | Grundplatte |
| 23 | Rahmen |
| 24 | Kammer zur Aufnahme des Gelausschnitts |
| 25 | Aufsatzrahmen / Oberteil des Gelhalters 21 |
| 26 | Schenkel /Klemmteil des Aufsatzrahmens 25 |
| 27 | Gelausschnitt |
| 28 | Rand des Gelausschnitts |
| 29 | Unterteil |
| 30 | |
| 31 | Äquilibrierflüssigkeit |
| 41 | Ausstechroboter |
| 51 | Ausstechwerkzeug/Entnahmeeinrichtung |
| 53 | Träger |
| 55 | Ausschnitt |
| 57 | Wölbung |
| 58 | Wölbung |
| 61 | Bohrung |
| 62 | Bohrung |
| 63 | Stirnfläche |
| 64 | Stirnfläche |
| 65 | Flüssigkeit im Ausstecher 66 |
| 66 | Ausstecher/Entnahmemittel |
| 68 | Spiralfeder |
| 69 | Gelstück |
| 71 | Stellring |
| 72 | Klemmschraube |
| 74 | Nut |
| 76 | Zahnleiste |
| 77 | Träger des Ausstechwerkzeugs 51 |
| 78 | Transportarm |
| 79 | ein ausgestossenes Gelstück |
| 81 | Löcher |
| 82 | oberes Ende des Ausstechers 66 |
| 83 | unteres Ende des Ausstechers 66 |
| 91 | Mikrotiterplatte |

Mit einem zweidimensionalen Polyacrylamidgel wird zum Beispiel eine Mischung von Proteinen aus einer biologischen Probe (z.B. Serum, Zellkultur oder Gewebe) aufgetrennt.
Durch Anfärben der aufgetrennten Proben werden die Proteine sichtbar gemacht und deren Lage in der Gelschicht durch Absorption, Fluoreszenz, Radioaktivität oder Lumineszenz auf dem Gel ermittelt bzw. erfasst. Je nach Färbe- oder Markierungsmethode wird dafür ein entsprechendes Lesegerät z.B. einen Scanner verwendet, um die Lage der Anreicherungspunkte in digitaler Form zur weiteren Verarbeitung ermitteln bzw. erfassen zu können. Die digitalen Daten werden in einer Datenbank abgelegt und können von weiteren Programmen, z.B. für die Steuerung eines Ausstechroboters, benutzt werden. Programme dieser Art sind auf dem Markt erhältlich.

Von entscheidender Bedeutung für die Weiterverarbeitung des Gels ist es, dass die Positionen der markierten Anreicherungspunkte in der Gelschicht über längerer Zeit, z.B. über acht oder mehr Stunden, unverändert gehalten werden. Hierzu wird vorzugsweise das gefärbte und eventuell über längere Zeit versiegelt gelagerte Gel (z.B. in einer Folie eingeschweisst) über mehrere Stunden in einem Flüssigkeitsbad äquilibriert. Insbesondere wird dabei abgewartet, bis ein Gleichgewichts-Quellungsgrad erreicht ist. Die Zeitdauer dafür wird empirisch festgelegt.

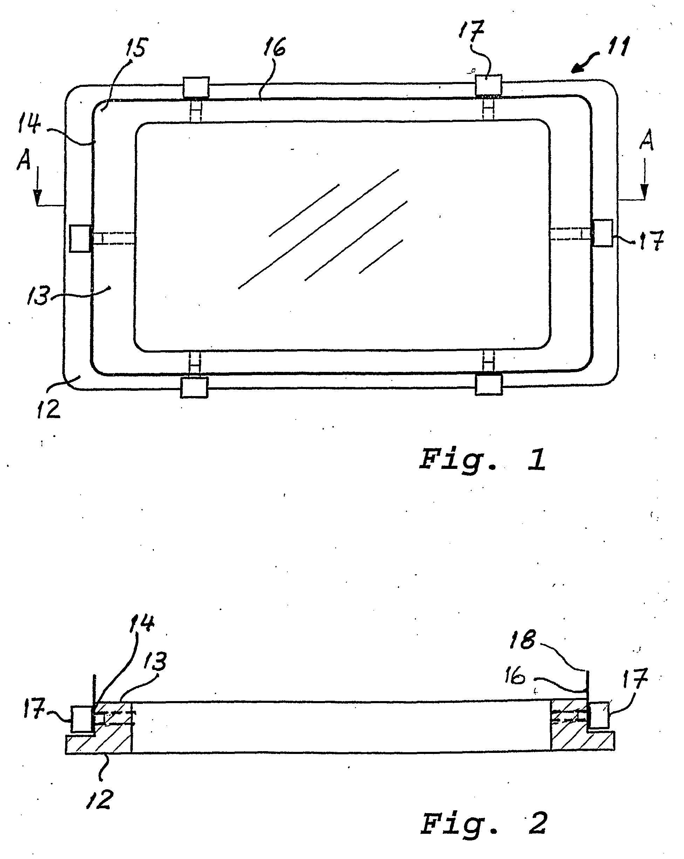

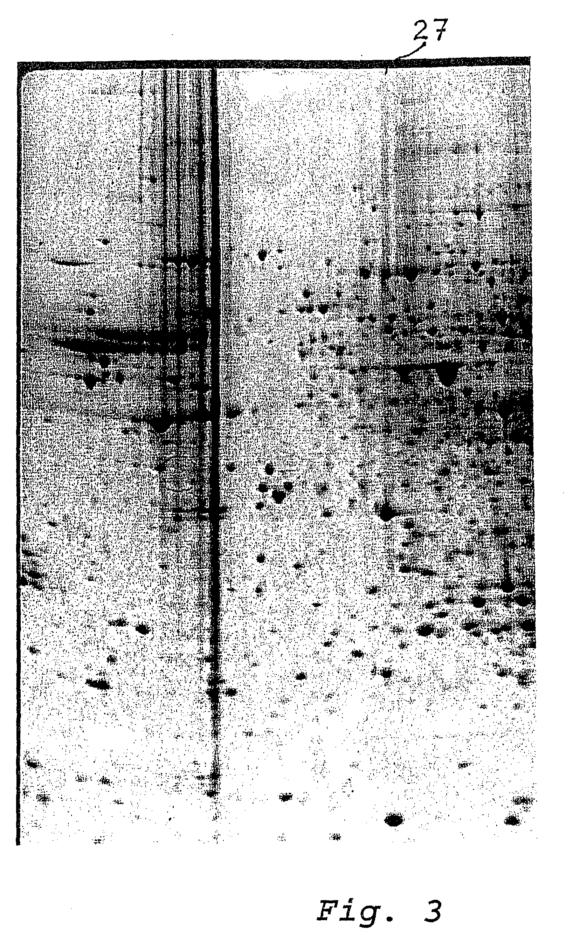

Danach wird ein in Fig. 3 gezeigter Gelausschnitt 27 mit einem Gelschneider 11 (nachstehend anhand der Figuren 1 und 2 beschrieben) geschnitten und in den Gelhalter 21 eingelegt. Eine Grundplatte 22 bildet den Boden des Gelhalters 21 aus.

Die Grundplatte 22 ist vorzugsweise transparent und der Gelhalter 21 so geformt, dass er mit kommerziell erhältlichen Abtastgeräten, wie z.B. Flachbettscanner, verwendbar ist. Das Gel kann dazu z.B. mit dem Farbstoff "Coommassie Blue" eingefärbt werden.

Mit einem Scanner (nicht dargestellt) wird ein Bild einer untersuchten Gelschicht aufgenommenen, auf einem Bildschirm dargestellt und in Form von digitalen Signalen gespeichert. Mit einem geeigneten Programm werden von einem Anwender Anreicherungspunkte, die sich durch ihre Färbung auszeichnen, auf dem Bildschirm graphisch markiert und damit ausgewählt, um ausgestochen zu werden. Gegebenenfalls kann diese Auswahl auch automatisch erfolgen, z.B. in der Art, dass alle Anreicherungspunkte, deren Markierung gewisse Voraussetzungen (Grösse, Intensität) erfüllen, zum Ausstechen markiert werden.

Der Gelhalter 21 wird in den Ausstechroboter 41 überführt. Der Ausstechroboter fährt die ausgewählten Anreicherungspunkte an und sticht die entsprechenden Gelstücke 69 aus dem Gel aus. Sie werden in einen Vorratsbehälter (nicht dargestellt) überführt, z.B. Mikrotiterplatten mit 96, 384 oder 1536 Kavitäten, die einzeln für das Ablegen eines Gelstückes 69 auswählbar sind.

### Ausführungsbeispiel eines Gelschneiders

Figuren 1 und 2 zeigen einen erfindungsgemässen Gelschneider 11.

Der Gelschneider 11 ist wie folgt aufgebaut: eine Grundplatte 12 weist eine Erhebung 13 auf, die rechteckige Seitenwände 14 mit abgerundeten Ecken 15 ausbildet. Enganliegend an die Aussenfläche der Seitenwände 14 ist ein metallenes Messerband 16 gelegt und mit Schrauben 17 fixiert. Das Messerband 16 hat eine Schneidekante 18, deren Kontur einer vorgegebenen Kontur eines zu schneidenden/abzutrennenden Gelausschnitts 27 entspricht.

Der Gelausschnitt 27 ist durch Hindurchdrücken der Schneidkante 18 durch das Gel herausschneidbar/abtrennbar.

Der Gelausschnitt 27 hat eine Dicke, die viel kleiner als der Umfang des Gelausschnitts 27 ist. Wie nachstehend beschrieben, stimmt der Umfang des Gelausschnitts 27 genau oder wenigstens annähernd mit dem vorgegebenen Umfang einer Aufnahmestelle oder Kammer 24 in einem Gelhalter 21 überein.

Das Messerband 16 kann nicht nur aus Metall, sondern auch aus Glas, Keramik oder Kunststoff bestehen. Ein Messerband aus Glas oder Keramik besteht z.B. aus mehreren streifenförmigen Teilen, die an den Enden übereinander geschoben werden, um diese Teile an die Aussenwand 14 exakt anzulegen. Diese Teile sind z.B. vier rechtwinklig abgewinkelte Leisten, die jeweils an einer Ecke der Erhebung 13 angelegt werden und deren Schenkel sich etwas überlappen.

Das Messerband 16 kann auch als integraler Bestandteil der Erhebung 13 ausgebildet werden. In diesem Fall entfallen die Schrauben 17.

Das Messerband 16 weist vorzugsweise durch keilförmige Ausbildung am Erhebung 13 fernen Ende eine scharfe Schneidekante 18 auf, die einen sauberen Schnitt ermöglicht. Es kann jedoch genügen, dass das Messerband 16 hinreichend dünn ausgeführt wird.

Die Schneidkante 18 ist vorzugsweise aus streifenförmigen Elementen ausgebildet, die an der Aussenfläche 14 der Erhebung 13 derart eng anliegend angebracht sind, dass die Aussenfläche 14 der Erhebung 13 die Schneidelinie der Schneidkante 18 definiert.

Mit der Schneidkante 18 nach unten gerichtet wird der Gelschneider 11 auf ein Gel aufgelegt und nach unten gedrückt. Dabei wird ein von der Form des Messerbandes 16 bestimmten Gelausschnitt 27 aus dem Gel herausgeschnitten bzw. abgetrennt. Der Gelausschnitt 27 wird dann in den Gelhalter 21 überführt und darin wie unten beschrieben angeordnet.

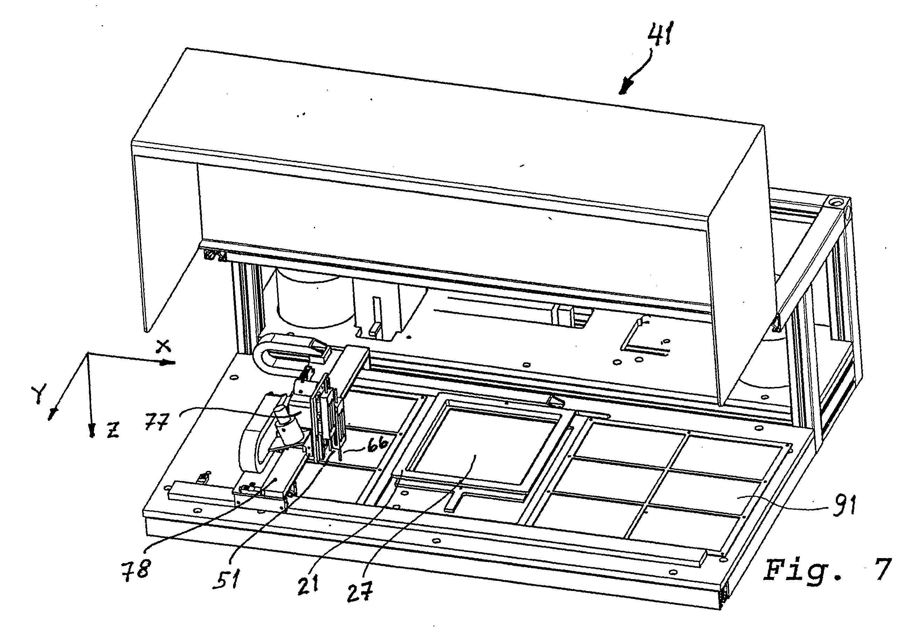

Fig 7 zeigt einen Ausstechroboter 41 in dem ein Gelhalter 21 angeordnet ist.

### Ausführungsbeispiel eines Gelhalters

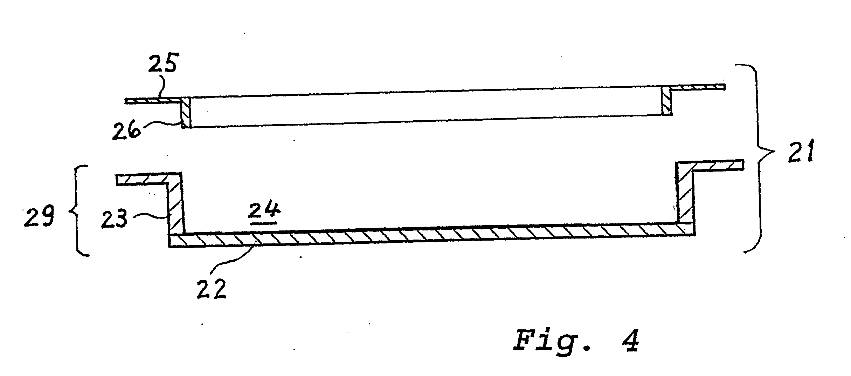

Wie aus Fig. 4 ersichtlich, besteht der Gelhalter 21 im Wesentlichen aus einem Unterteil 29 und einem Oberteil 25.

Das Unterteil 29 besteht aus einem Rahmen 23, an dem eine Grundplatte 22 befestigt ist, welche der Boden des Unterteils 29 bildet. Der Rahmen 23 und die Grundplatte 22 begrenzen eine Kammer 24 im Unterteil 29. Die Kammer 24 weist eine Bodenfläche auf, welche zur Aufnahme eines plattenförmigen Gelausschnittes 27 ausgebildet ist. Es gibt keine feste Verbindung zwischen der Bodenfläche der Kammer 24 und dem Gelausschnitt 27.

Die Grundplatte 22 des Unterteils 29 besteht vorzugsweise wenigstens zum Teil aus einem Material, das für eine Strahlung, insbesondere Licht, transparent ist, die zum elektro-optischen Abtasten bzw. Detektion von Anreicherungspunkten in einem Gelausschnitt 27 verwendbar ist, der im Gelhalter 21 eingelegt ist. Falls eine Durchstrahlung von unten nicht nötig ist, kann die Grundplatte 22 auch licht- bzw. energieundurchlässig oder sogar reflektierend ausgeführt sein.

Das Oberteil 25 ist als Aufsatzrahmen ausgebildet, der ein Klemmteil 26 aufweist, das bei auf dem Unterteil 29 aufgesetztem Oberteil 25 in die Kammer 24 derart hineinragt, dass ein in der Kammer 24 befindlicher Gelausschnitt 27 am Rande zwischen dem Klemmteil 26 und der Bodenfläche der Kammer 24 eingeklemmt ist. Das Klemmteil 26 ist eine Leiste, die im Wesentlichen komplementär zur Kontur der Kammer 24 ausgebildet ist, so dass das Klemmteil 26 an den Seitenwänden, welche die Kammer 24 begrenzen, gleitend oder mit geringem Spiel in die Kammer 24 absenkbar ist, so dass sich die Klemmwirkung des Klemmteils 26 linienförmig am Rand 28 eines im Unterteil 29 angeordneten Gelausschnittes 27 einstellt.

Fig. 4 zeigt eine erste Ausführungsform, in der die Kontur der Kammer 24 genau mit der Randkontur der Schneidekante 18 des Gelschneiders 11 übereinstimmt. Ein Gelausschnitt 27, der mittels des Gelschneiders 11 aus einer Gelschicht ausgeschnitten/abgetrennt wurde, passt also mit geringem Spiel in diese Kammer.

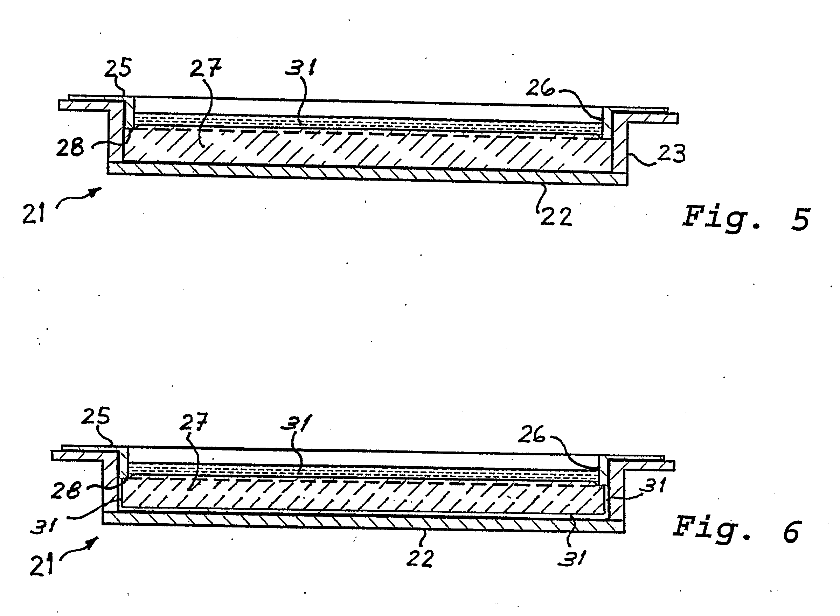

Fig. 5 zeigt eine zweite Ausführungsform, in der die Kontur der Kammer 24 geringfügig grösser als die Randkontur der Schneidekante 18 ist. In diesem Fall weist ein Gelausschnitt 27 ein geringes Untermass gegenüber der Kammer 24 auf und lässt sich im Unterteil 29 mit einem kleinen Spiel anordnen.

In einer dritten Ausführungsform (nicht dargestellt) kann die Kontur der Kammer geringfügig kleiner als die Randkontur der Schneidekante 18 sein. In diesem Fall weist der Gelausschnitt 27 ein geringes Übermass gegenüber der Kammer 24 auf und lässt sich unbeweglich im Unterteil 29 ohne Spiel anordnen, so dass keine weiteren Massnahmen zum Halten des Gelausschnitts nötig sind.

Der Aufsatzrahmen 25 ist im Wesentlichen eine winkelleistenförmig und hat eine Kontur, die exakt der Kontur der Kammer im Unterteil 29 angepasst ist. Der senkrechte Schenkel bzw. Klemmteil 26 des Oberteils bzw. Aufsatzrahmen 25 weist dabei eine Länge auf, dass er, wenn der Aufsatzrahmen 25 auf dem Unterteil 29 aufliegt, auf dem Rand 28 des Gels aufliegt und diesen ein wenig eindrückt. Durch den dabei auf den Rand 28 des Gelausschnitts 27 ausgeübten Druck wird das Gel zusätzlich im Gelhalter 21 unbeweglich gehalten. Diese Massnahme ist insbesondere dann angezeigt, wenn der Gelausschnitt gegenüber den Abmessungen des Rahmens 23 ein geringes Untermass aufweist.

In der in Fig. 5 gezeigten Ausführung, ist der Gelausschnitt 27 mit einer dünnen Schicht Äquilibrierflüssigkeit 31 bedeckt.

In der in Fig. 6 gezeigten Ausführung, ist der Gelausschnitt 27 mit einer dünnen Schicht Äquilibrierflüssigkeit 31 bedeckt und die Äquilibrierflüssigkeit 31 dringt dabei auch zwischen der Grundplatte 22 und dem Gelausschnitt 27 und zwischen dem Rahmen 23 und dem Gelausschnitt 27 in einer dünnen Schicht ein, so dass der Gelausschnitt 27 vollständig von Äquilibrierflüssigkeit 31 umgeben ist. Diese Massnahme gewährleistet, dass das Gel einen konstanten Quellungsgrad und damit gleich bleibende Dimensionen aufweist. Dafür ist es jedoch nötig, dass der Gelausschnitt 27 vor dem Scannen genügend lange Zeit in der Äquilibrierflüssigkeit 31 liegt, dass sich ein Gleichgewicht des Quellungsgrades einstellen kann. Vorteilhaft ist dabei, eine wenigstens annähernd konstante Temperatur des Gelausschnitt 27 und der Äquilibrierflüssigkeit 31 einzuhalten.

### Ausführungsbeispiel des Verfahrens zum Positionieren eines Gelausschnitts im einem Gelhalter

Erfindungsgemäss umfasst ein Verfahren zum Positionieren eines Gels in einem Gelhalter 21 grundsätzlich folgende Schritte:
(a) aus dem Gel wird ein Gelausschnitt 27 mit einer Randkontur abgetrennt, die genau oder wenigstens annähernd mit der Kontur der Kammer 24 zur Aufnahme des Gelausschnitts 27 im Gelhalter 21 übereinstimmt,
(b) der Gelausschnitt 27 wird in die Kammer 24 des Gelhalters (21) eingesetzt, und
(c) der Gelausschnitt 27 wird mit einer Äquilibrierflüssigkeit 31 gedeckt.

In einer ersten Ausführungsform des oben erwähnten grundsätzlichen Verfahrens passt die Randkontur des Gelausschnitts 27 genau zur Kontur der Kammer 24, so dass, wenn der Gelausschnitt 27 in die Kammer 24 eingesetzt wird, er dort praktisch unbeweglich angeordnet ist.

Durch die Bedeckung des Gelausschnitts 27 mit Äquilibrierflüssigkeit 31 wird erreicht, dass die räumliche Ausdehnung und die Lage des Gelausschnitts in der Kammer 24 über längerer Zeit, z.B. acht oder mehr Stunden, unverändert bleibt, so dass vor der Lagerung des Gelausschnitts im Gelhalter 21 bestimmte Koordinaten von ausgewählten Anreicherungspunkten gültig bleiben, und ein treffsicheres Ausstechen von Gelstücken anhand dieser Koordinaten auch nach einer Lagerungszeit von z.B. acht oder mehr Stunden sicher gestellt ist. Um sicherzustellen, dass die Lage des Gelausschnitts 27 im Gelhalter unverändert bleibt, enthält der Gelhalter vorzugsweise zusätzlich ein Klemmmittel 26, welches den Randbereich des Gelausschnitts 27 leicht gegen die Grundplatte des Gelhalters 21 drückt.

In einer zweiten Ausführungsform des oben erwähnten grundsätzlichen Verfahrens weist die Randkontur des Gelausschnitts 27 gegenüber der Kontur der Kammer 24 ein geringes Übermass auf, so dass, wenn der Gelausschnitt 27 in die Kammer 24 eingesetzt wird, er dort unbeweglich angeordnet ist. Da in diesem Fall der Gelausschnitt 27 ohnehin unbeweglich in der Kammer 24 gehalten wird, sind zusätzliche Massnahmen (wie die Verwendung des oben erwähnten Klemmmittels 26)zur Fixierung der Lage des Gelausschnitts 27 im Gelhalter 21 nicht erforderlich.

In einer dritten Ausführungsform dieses Verfahrens weist die Randkontur des Gelausschnitts 27 gegenüber der Kontur der Kammer 24 ein geringes Untermass auf, so dass, wenn der Gelausschnitt 27 in die Kammer 24 eingesetzt wird, er in einem Mass im Gelhalter 21 beweglich ist, das kleiner als eine vorgegebene, maximal zulässige Abweichung zwischen einer Ausstechposition im Gelausschnitt 27 und dem Ausstechort in einer Ausstecheinrichtung ist.

In diesem Fall wird der Gelausschnitt 27 nicht nur mit Äquilibrierflüssigkeit 31 bedeckt, sondern wird von dieser umgeben, was die Haltbarkeit des Gelausschnitts 27 mit unveränderter räumlicher Ausdehnung verbessert. Dass auch in diesem Fall die Lage des Gelausschnitts 27 im Gelhalter unverändert bleibt, wird vorzugsweise durch Verwendung des Klemmmittels 26 sichergestellt, welches den Randbereich des Gelausschnitts 27 leicht gegen die Grundplatte des Gelhalters 21 drückt.

In den oben beschriebenen Verfahrensvarianten wird der Gelausschnitt 27 mittels eines Gelschneiders 11 aus dem Gel abgetrennt, wobei der Gelschneider 11 eine Schneidkante 18 mit einer Kontur aufweist, die annähernd mit der Kontur der Kammer 24 zur Aufnahme des Gelausschnitts 27 im Gelhalter 21 übereinstimmt, wobei mit dem Ausdruck "annähernd" die genaue Übereinstimmung, ein geringes Untermass oder ein geringes Übermass gemeint sind.

In allen oben beschriebenen Verfahrensbeispielen wird der Schnitt bzw. Abtrennen des Gelausschnitts 27 durch Auflegen des Gelschneiders 11 auf das Gel durchgeführt.

In allen oben beschriebenen Verfahrensbeispielen wird das Gel vorzugsweise bereits vor dem Abtrennen des Gelausschnitts 27 in der Äquilibrierflüssigkeit 31 gelagert.

In einer bevorzugten Ausführungsform des Verfahrens wird in der Kammer 24 des Gelhalters 21, welcher den Gelausschnitt 27 enthält, mindestens soviel Äquilibrierflüssigkeit 31 gegeben, dass sich über dem Gelausschnitt 27 eine Äquilibrierflüssigkeitschicht ausbildet, welche die ganze Oberfläche des Gelausschnitts 27 deckt.

### Ausführungsbeispiel für das Scannen und für die Auswahl der Austechorte

Ein erfindungsgemässer Gelhalter 21 lässt sich in kommerziell erhältlichen Scannern einsetzen, z.B. in Flachbettscanner. Bei entsprechender Ausführung des Gelhalters 21 kann dieser auch in einem spezialisierten Scanner eingesetzt werden, z.B. bei radioaktiver Markierung der Anreicherungspunkte im Gelausschnitt.

Für die Auswertung der vom Scanner gelieferten Daten und die manuelle oder automatisierte Auswahl der Anreicherungspunkte, die ausgestochen werden sollen, können an sich vorbekannte Systeme verwendet werden, wie z.B. das in der WO-A-98/23950 beschriebene System.

Grundsätzlich wird dabei das vom Scanner erzeugte Bild des Gelausschnitts auf einem Bildschirm dargestellt, gegebenenfalls auch ausschnittsweise und stark vergrössert. Eine Bedienungsperson kann mittels eines Cursors, der vorteilhafterweise die Ausschnittgeometrie des verwendeten Ausstechwerkzeuges nachbildet, auf dem Bildschirm die Anreicherungspunkte anfahren, diese graphisch markieren und damit die Ausstechorte definieren, bzw. auswählen. Wie in der genannten WO-A-98/23950 erwähnt, kann ein Computer aus den mit dem Scanner gewonnenen Bildinformation Konzentrationswerte und andere charakteristische Daten der Anreicherungspunkte ermitteln und auf dieser Basis Ausstechpunkte festlegen.

Zur Sicherstellung der mit dem erfindungsgemässen Verfahren erzielten Vorteile wird der Gelhalter 21 mit dem Gelausschnitt 27 nach dem Scannen längere Zeit, d.h. zum Beispiel über acht oder mehr Stunden, vorzugsweise in einer geeigneten Umhüllung und temperiert aufbewahrt, um Verlust von Äquilibrierflüssigkeit 31 zu vermeiden. Dadurch wird vermieden, dass sich die Ausdehnung des Gelausschnitts 27 mit der Zeit verändert und dass sich die Positionen der Anreicherungspunkte relativ zum Gelhalter 21 verschieben.

Wie Fig. 7 zeigt, wird zum Ausstechen der Gelhalter 21 in einem Ausstechroboter 41 platziert. Der Ausstechroboter 41 weist einen Antrieb auf, der ein Ausstechwerkzeug 51 über dem Gelausschnitt 27 im Gelhalter 21 an beliebige Positionen fahren kann. Dieser Antrieb kann manuell oder vorzugsweise von einem Computer gesteuert werden, in dem die erforderlichen Steuerdata gespeichert sind oder diese von einer Steuerenrichtung geliefert bekommt.

### Ausführungsbeispiel einer Entnahmeeinrichtung zur Entnahme von Gelstücken aus einem Gelauschnitt

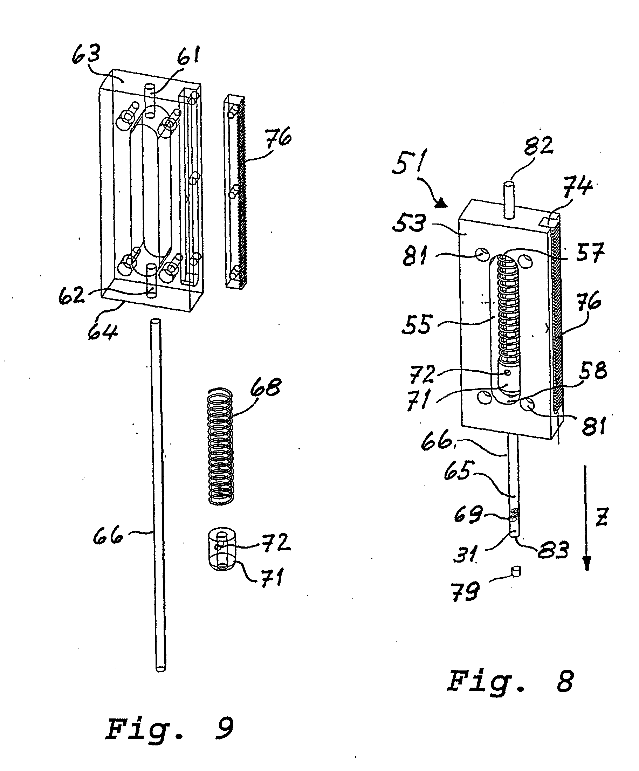

Ausgehend vom erfindungsgemässen Gelhalter 21 und der damit verbundenen Art, die Ausdehnung des Gelausschnittes 27 und damit die Lage von jedem Punkt des Gelausschnittes über längere Zeiträume unverändert zu halten, wird erfindungsgemäss zur Entnahme von Gelstücken aus dem Gelausschnitt 27 ein neuartiges Ausstechwerkzeug 51 mit Vorteil als Entnahmeeinrichtung verwendet. Ein solches Ausstechwerkzeug 51 ist in den Figuren 8 und 9 dargestellt.

Wie in Figuren 8 und 9 gezeigt, enthält das Ausstechwerkzeug 51 folgende Komponenten:
(a) ein im Wesentlichen rohrförmiges Ausstecher/Entnahmemittel 66, der in einem Träger 53 längsbeweglich angeordnet ist und dessen eines dem Abtrennen dienenden Ende 83 als Ausstechmittel ausgebildet ist,
(b) eine Feder 68, die sich am Träger 53 und an einem dem Ausstecher 66 zugeordneten Stellring 71 mit Klemmschraube 72 derart abstützt, dass der Ausstecher 66 gegen die Rückstellkraft der Feder 68 aus seiner Ruhelage heraus bewegbar ist.

In einer bevorzugten Ausführungsform ist das Ausstechwerkzeug 51 so eingerichtet, dass das Ende 83 des Ausstechers 66 in dessen Ruhelage am Weitesten aus dem Träger 53 vorsteht.

Wie in Figuren 8 und 9 gezeigt, befindet sich im Träger 53 ein im Wesentlichen ovaler, länglicher Ausschnitt 55. Von den oberen und unteren Wölbungen 57, 58 geht jeweils eine Bohrung 61 bzw. 62 zur oberen bzw. unteren Stirnfläche 63 bzw. 64. Die Form des Ausschnitts 55 rührt mehr aus der Verwendung eines rotierenden Fräsers für die Herstellung her als auf einer technischen Notwendigkeit. Der Ausschnitt kann z.B. auch einen rechteckigen Querschnitt aufweisen.

Das Entnahmemittel ist ein Ausstecher 66 durch die Bohrungen 61, 62 längsbeweglich in vertikaler Richtung (Z-Richtung) geführt wird.

Der Ausstecher 66 ist ein Rohr dessen oberes Ende mit einer Unterdruck-/Überdruckanlage verbunden ist, die eine unter Unter- bzw. Überdruck stehende Flüssigkeit enthält. Damit ist es möglich, im Ausstecher 66 einen Unterdruck zu erzeugen, um Material in seinem unteren Ende einzusaugen. Durch Einblasen von Luft oder einem anderen Gas ist es umgekehrt möglich, eingesaugtes Material aus dem Ausstecher 66 wieder nach unten hinauszutreiben. Um ein Aufsteigen dieses Materials in die Unterdruck-/Überdruckanlage zu vermeiden, ist im Ausstecher 66 oder in der nicht gezeigten Unterdruck-/Überdruckanlage ein Durchflussbegrenzer vorgesehen, der an sich bekannt ist.

Innerhalb des Ausschnitts 55 umgibt eine Spiralfeder 68 den Ausstecher 66. Die Spiralfeder 68 stützt sich zum einen an der oberen Wölbung 57 des Ausschnitts 55 und zum anderen an einem Stellring 71 ab. Der Stellring 71 ist auf geeignete Art, z.B. durch eine Klemmschraube 72, auf dem Ausstecher 66 befestigt.

Die Spiralfeder 68 ist so dimensioniert, dass sie in Ruhestellung den Stellring 71 leicht gegen die untere Wölbung 58 des Ausschnitts 55 andrückt.

In einer schmalen, dem Ausschnitt 55 abgewendeten Längsseite des Trägers 53 befindet sich eine parallel zum Ausstecher 66 verlaufende Nut 74. In diese Nut 74 ist eine Zahnleiste 76 eingesetzt.

Das Ausstechwerkzeug 51 wird auf geeignete Art an einem beweglichen Transportarm 78 (Fig. 7) einer X-Y-Z-Transporteinrichtung so angebracht, dass das Ausstechwerkzeug 51 in vertikaler Richtung bewegbar ist, um den Ausstecher 66 durch den Gelausschnitt 27 im Gelhalter 21 hindurch absenken und wieder anheben zu können. Der Aufbau und die Funktion einer X-Y-Z-Transporteinrichtung sind an sich bekannt und daher hier nicht näher beschrieben.

In der beispielhaften Ausführung wird die Bewegung des Ausstechwerkzeugs 51 in vertikaler Richtung dadurch bewirkt, dass ein Zahnrad (nicht dargestellt) in die Verzahnung der Zahnleiste 76 eingreift, so dass eine Drehung des Zahnrades in die eine oder andere Richtung das Ausstechwerkzeug 51 anhebt bzw. absenkt. Das Ausstechwerkzeug 51 kann z.B. mittels Schrauben, welche durch Löcher 81 eingeführt werden, an einem vertikal beweglichen Schlitten oder Ähnlichem befestigt sein. Die Bewegung des Ausstechwerkzeugs 51 ist auch erzielbar, indem der Träger 53 seitlich in Schienen geführt wird oder durch Befestigung des Ausstechwerkzeuges 51 auf einem Schlitten, der mit einem Antrieb verbunden ist. Das Ausstechwerkzeug 51 kann ebenfalls mittels eines pneumatischen Antriebes in vertikaler Richtung bewegt werden.

In einer erweiterten Ausführung werden gleichzeitig mehrere parallel arbeitende Ausstechwerkzeuge 51 verwendet.

Für das Ausstechen wird das Ausstechwerkzeug 51 vom Ausstechroboter 41 durch Bewegen des Armes 78 in X-Richtung und des Trägers 77 des Ausstechwerkzeugs 51 auf dem Arm 78 in Y-Richtung an eine vorgegebene Ausstechposition verfahren.

Das Ausstechwerkzeug 51 wird in Z-Richtung nach unten abgesenkt. Dabei trifft das untere Ende des Ausstechers 66 zunächst auf eine Schicht Äquilibrierungsflüssigkeit. Beim weiteren Absenken wird vorteilhafterweise dafür gesorgt, dass zunächst eine kurze Säule Äquilibrierungsflüssigkeit 31 in den Ausstecher 66 gelangt. Dazu muss entweder ein Druckausgleich mit der Umgebung erfolgen, oder es kann sogar durch Detektieren des Auftreffens des Ausstechers 66 auf die Oberfläche der Äquilibrierflüssigkeit 31 oder bei Unterschreiten einer gewissen Höhe leichter Unterdruck den Ausstecher 66 angelegt werden.

Falls der Ausstecher 66 z.B. eine hohle Nadel aus Metall und somit elektrisch leitfähig ist, wird das Detektieren des Auftreffens des Ausstechers 66 auf die Äquilibrierflüssigkeit 31 zum Beispiel durch Feststellung des Auftretens eines elektrischen Kontaktes zwischen dem Ausstecher 66 und der Äquilibrierflüssigkeit 31 mittels einer elektronischen Schaltung erfasst.

Beim weiteren Absenken durchstösst das untere Ende 83 des Ausstechers 66 schliesslich den Gelausschnitt 27, wobei ein Gelstück 69 in den Ausstecher 66 hineingeschoben wird. Schliesslich stösst das untere Ende 83 an der Grundplatte 22 an. Da der Ausstecher 66 im Träger 53 in Längsrichtung bewegbar ist, ist es dabei nicht nötig, die Bewegung des Ausstechwerkzeuges 51 in Z-Richtung genau beim Auftreffen auf die Grundplatte 22 anzuhalten. Dies ist vorteilhaft, weil es dadurch nicht notwendig ist, das Auftreffen des Ausstechers 66 auf ein festes Hindernis (die Grundplatte 22) zu detektieren, oder den Unterschied zwischen dem Widerstand beim Durchdringen des Gelausschnitts 27 und dem Widerstand beim Auftreffen auf die Grundplatte 22 zu berücksichtigen.

Es ist hingegen auf einfache Weise möglich, das Ausstechwerkzeug 51 soweit nach unten zu bewegen, bis der Stellring 71 eine gewisse Strecke gegen die Kraft der Feder 68 zurückgeschoben ist. Die Bewegung wird dann angehalten, da nun das Ausstechwerkzeug 51 sicher auf der Grundplatte 22 angekommen ist. Im Unterschied zum Stand der Technik, insbesondere bei der Lösung, bei der das Gel fest mit einem dimensionsstabilen Träger verbunden ist, ist gemäss vorliegender Erfindung damit bereits ein Gelstück vollständig vom Gelausschnitt 27 abgetrennt. Es wird Unterdruck an den Ausstecher 66 angelegt, um noch eine geringe Menge Äquilibrierflüssigkeit in den Ausstecher 66 hineinzuziehen. Im Ergebnis befindet sich dann ein Gelstück im Ausstecher 66, das sowohl nach oben wie auch nach unten von einer kurzen Säule von Äquilibrierflüssigkeit von der Umgebung getrennt ist, also immer noch von Äquilibrierflüssigkeit umgeben ist.

### Ausführungsbeispiel eines Ausstechroboters

Der Ausstechroboter 41 fährt das Ausstechwerkzeug 51 über die Aufbewahrungsgefässe, z.B. über die Kavitäten (wells) von einer Mikrotiterplatte 91 (siehe Fig. 7), positioniert es über einem der Gefässe und stösst den Inhalt des Ausstechers 66 durch Anlegen von Überdruck nach unten in das vorgesehene Gefäss aus. Dabei wird das Ausstechwerkzeug durch die Äquilibrierflüssigkeit 31 gespült, so dass ein spezieller Spülvorgang bzw. die Verwendung von einem Ausstecher mit wegwerfbarem Ausstecheinsatz nicht nötig ist.

Da bei diesem Verfahren jeweils eine gewisse Menge Äquilibrierflüssigkeit 31 aus dem Gelhalter entfernt wird, wird erfindungsgemäss Äquilibrierflüssigkeit 31 in ausreichendem Ausmass in den Gelhalter 21 nachgefüllt, um sicher zu stellen, dass der Gelausschnitt von einer ausreichenden Menge Äquilibrierflüssigkeit umgeben bleibt.

Ein weiterer Vorteil der Erfindung besteht darin, dass in den Ausstecher 66 keine Umgebungsluft eingesaugt wird und damit auch nicht in eines der Gefässe, z.B. in die Kavitäten der Mikrotiterplatte 91 überführt wird.

### Ausführungsbeispiel eines Verfahrens zur Entnahme von Gelstücken aus einem Gelausschnitt

Erfindungsgemäss umfasst ein Verfahren zum Abtrennen und Entfernen von Gelstücken aus einem Gelausschnitt 27, der sich zusammen mit einer Äquilibrierflüssigkeit 31 in einem Gelhalter 21 befindet, folgende Schritte:
(a) der Gelausschnitt 27 wird in einem Gelhalter 21 so angeordnet und gehalten, dass sich oberhalb als auch unterhalb des Gelausschnitts 27 zumindest im Bereich der zu entfernenden Stücke eine Schicht Äquilibrierflüssigkeit 31 befindet,
(b) ein rohrförmiges Ausstecher/Entnahmemittel 66 wird mit seinem eine Öffnung aufweisenden Ende 83 durch den Gelausschnitt 27 hindurchgestossen, dadurch wird ein Gelstück (69) ausgestochen und danach wird durch Erzeugen von Unterdruck im Ausstecher 66 das ausgestochene Gelstück 69 und nachfolgende Äquilibrierflüssigkeit 31 in den Ausstecher 66 eingesaugt, so dass das Gelstück 69 von der Öffnung 83 des Ausstechers 66 durch eine Säule der Äquilibrierflüssigkeit 31 getrennt ist.

Beim erfindungsgemässen Verfahren wird der Gelausschnitt 27 im Gelhalter 21 vorzugsweise so angeordnet, dass er in der Äquilibrierflüssigkeit 31 schwimmt und ist daher vom Boden des Gelhalters 21 beabstandet. Zum Abtrennen eines Gelstückes 69 aus dem Gelausschnitt 27 genügt deshalb das Einstechen eines Ausstechwerkzeuges 51. Da Äquilibrierflüssigkeit 31 auch unterhalb des Gelausschnitts 27 vorhanden ist, wird beim Ausstechen des Gelausschnitts 27 durch Anlegen eines Unterdruckes im Ausstecher 66 zuerst etwas Äquilibrierflüssigkeit gesaugt, anschliessend wird ein Gelstück 69 ausgestochen, danach noch etwas Äquilibrierflüssigkeit nachgesogen.

Die Säule von nachgesogener Äquilibrierflüssigkeit 31 stellt eine Trennung des aufgenommenen Gelstückes 69 von der Umgebung dar. Oberhalb eines ausgeschnittenen Gelstückes 69 befindet sich ebenfalls eine kleine Säule Äquilibrierflüssigkeit 31, so dass das Gelstück auch in dieser Richtung von der Umgebung abgeschirmt ist.

Im Rahmen des soeben beschriebenen Verfahrens befindet sich vorzugsweise über dem Gelausschnitt 27 eine Schicht der Äquilibrierflüssigkeit 31, so dass beim Durchstossen des Ausstechers 66 durch den Gelausschnitt 27 zunächst eine kurze Flüssigkeitssäule der Äquilibrierflüssigkeit 31 in dem Ausstecher 66 aufgenommen wird, wodurch nach dem Abtrennen eines Gelstückes 69 auch oberhalb des Gelstückes im Ausstecher 66 eine Schicht der Äquilibrierflüssigkeit 31 vorhanden ist.

Vorzugsweise werden vor dem Abtrennen der Gelstücke 69 die Orte auf dem Gelausschnitt 27 festgelegt, wo die abzutrennenden Gelstücke liegen. Zur Abtrennung der Gelstücke 69 wird Gelhalter 21 in eine Entnahmevorrichtung mit mindestens einer Entnahmeeinrichtung 51 mit einem Ausstecher 66 eingesetzt, die Entnahmeeinrichtung 51 wird an die vorbestimmten Orte auf dem Gelausschnitt 27 positioniert und dann wird das Abtrennen der Gelstücke 69 mittels des Ausstechwerkzeugs 51 durchgeführt.

Ein abgetrenntes Gelstück 69 wird aus dem Ausstecher 66 vorzugsweise durch Erzeugen von Überdruck im Ausstecher 66 ausgestossen.

Im Rahmen des oben beschriebenen Verfahrens zum Abtrennen und Entfernen von Gelstücken 69 aus einem Gelausschnitt 27 wird vorzugsweise ein Gelhalter 21 verwendet, der ein Unterteil 29 und ein Oberteil 25 umfasst, wobei das Unterteil eine Kammer 24 aufweist, die eine Bodenfläche hat und zur Aufnahme eines plattenförmigen Gelausschnittes 27 ausgebildet ist, und das Oberteil 25 ein Klemmteil 26 aufweist, das bei auf dem Unterteil 29 aufgesetztem Oberteil 25 in die Kammer 24 derart hineinragt, dass ein in der Kammer 24 befindlicher Gelausschnitt 27 am Rande zwischen dem Klemmteil 26 und der Bodenfläche der Kammer 24 eingeklemmt ist.

### Ausführungsbeispiel einer Vorrichtung zum Analysieren vorbestimmter Bereiche eines Gelausschnittes

Eine Vorrichtung zum Analysieren vorbestimmter Bereiche eines Gelausschnittes 27, insbesondere von Anreicherungspunkten nach Durchführen einer Gemischtrennung in dem Gel, umfasst folgende Komponenten:
(a) eine erste Vorrichtung, in welche einen Gelhalter 21 einsetzbar ist und welche über Mittel verfügt, um die zu analysierenden Bereiche des Gelausschnittes 27 zu detektieren und/oder eine Darstellung des Gelausschnittes 27 zu erstellen, in der für die Analyse in Frage kommende Bereiche erkennbar sind, wobei die erste Vorrichtung Mittel zum Markieren der zu analysierenden Bereiche auf einer elektronisch erzeugten Abbildung des Gelausschnittes 27 enthält, und wobei im Gelhalter 21 das Gelausschnitt 27 in Kontakt mit einer Äquilibrierflüssigkeit 31 ist; und
(b) eine zweite Vorrichtung mit einer Aufnahmestelle für den Gelhalter 21 und mit Transportmitteln, um eine Entnahmevorrichtung 51, welche zum Abtrennen und Entfernen eines Stückes 69 aus einem Gelausschnitt 27 dient, über den ausgewählten, zu entnehmenden Bereiche des Gelausschnittes 27 im Gelhalter 21 zu positionieren und sie zum Gelausschnitt 27 hin zu bewegen, so dass ein Ausstecher 66 jeweils an einem vorgegebenen Ort durch den Gelausschnitt 27 hindurchgetrieben werden kann, um ein Gelstück 69 aufzunehmen.

In einer bevorzugten Ausführungsform ist im Gelhalter (21) das Gelausschnitt (27) in der Äquilibrierflüssigkeit eingebettet.

Die Mittel zur Herstellung des Kontaktes zwischen dem Gelausschnitt 27 und der Äquilibrierflüssigkeit 31 sind oben in der Beschreibung des Gelhalters 21 beschrieben.

In einer bevorzugten Ausführungsform ist die Entnahmevorrichtung 51 mit einer Vorrichtung zum Erzeugen von Unterdruck und Überdruck im Ausstecher 66 verbunden, so dass durch Unterdruck im Ausstecher 66 ein durch den Ausstecher abgetrenntes Gelstück 69 in den Ausstecher 66 einsaugbar und nach dem Gelstück 69 noch eine bestimmte Menge der Äquilibrierflüssigkeit 31, die das Gelstück 69 umgibt, nachsaugbar ist, und durch Erzeugen eines Überdrucks im Ausstecher 66, das mit dem Ausstecher aufgenommene Material, insbesondere das Gelstück 69, wieder aus dem Ausstecher 66 ausstossbar ist.

In einer bevorzugten Ausführungsform umfasst der Gelhalter 21 ein Unterteil 29 und ein Oberteil 25, wobei das Unterteil eine Kammer 24 aufweist, die eine Bodenfläche hat und zur Aufnahme eines plattenförmigen Gelausschnittes 27 ausgebildet ist, und das Oberteil 25 ein Klemmteil 26 aufweist, das bei auf dem Unterteil 29 aufgesetztem Oberteil 25 in die Kammer 24 derart hineinragt, dass ein in der Kammer 24 befindlicher Gelausschnitt 27 am Rande zwischen dem Klemmteil 26 und der Bodenfläche der Kammer 24 eingeklemmt ist.

In einer bevorzugten Ausführungsform enthält die Entnahmeeinrichtung 51 folgende Komponenten:
(a) ein im Wesentlichen rohrförmiges Ausstecher/Entnahmemittel 66, das in einem Träger 53 längsbeweglich angeordnet ist und dessen eines dem Abtrennen dienenden Ende 83 als Ausstechmittel ausgebildet ist, und
(b) eine Feder 68, die sich am Träger 53 und am Ausstecher 66 derart abstützt, dass das Ausstecher 66 gegen die Rückstellkraft der Feder 68 aus seiner Ruhelage herausbewegbar ist.

Die vorangehende Beschreibung gestattet dem Fachmann eine Vielzahl Abwandlungen der erfindungsgemässen Vorrichtungen und Verfahren, ohne den Schutzbereich der Erfindung zu verlassen, der durch die Patentansprüche definiert ist.

## Patentansprüche

1. Verfahren zum Positionieren eines Gels in einem Gelhalter, **dadurch gekennzeichnet, dass**
(a) aus dem Gel ein Gelausschnitt (27) mit einer Randkontur abgetrennt wird, die genau oder wenigstens annähernd mit der Kontur einer Kammer (24) zur Aufnahme des Gelausschnitts (27) in einem Gelhalter (21) übereinstimmt,
(b) der Gelausschnitt (27) in die Kammer (24) des Gelhalters (21) eingesetzt wird, und
(c) der Gelausschnitt (27) mit einer Äquilibrierflüssigkeit (31) gedeckt wird.

2. Verfahren gemäss Anspruch 1, **dadurch gekennzeichnet, dass** die Randkontur des Gelausschnitts (27) gegenüber der Kontur der Kammer (24) ein geringes Untermass aufweist, so dass, wenn der Gelausschnitt (27) in die Kammer (24) eingesetzt wird, er in einem Mass im Gelhalter (21) beweglich ist, das kleiner als eine vorgegebene maximal zulässige Abweichung zwischen einer Ausstechposition im Gelausschnitt (27) und dem Ausstechort in einer Ausstecheinrichtung ist.

3. Verfahren gemäss Anspruch 1, **dadurch gekennzeichnet, dass** die Randkontur des Gelausschnitts (27) gegenüber der Kontur der Kammer (24) ein geringes Übermass aufweist, so dass, wenn der Gelausschnitt (27) in die Kammer (24) eingesetzt wird, er dort unbeweglich angeordnet ist.

4. Verfahren gemäss einem der Ansprüche 1 bis 3, **dadurch gekennzeichnet, dass** die Lage des Gelausschnitts (27) in Bezug auf die Kammer (24) mittels eines Klemmmittels (25) fixiert wird.

5. Verfahren gemäss einem der Ansprüche 1 bis 4, **dadurch gekennzeichnet, dass** der Gelausschnitt (27) mittels eines Gelschneiders (11) aus dem Gel abgetrennt wird, wobei der Gelschneider (11) eine Schneidkante (18) mit einer Kontur aufweist, die annähernd mit der Kontur der Kammer (24) zur Aufnahme des Gelausschnitts (27) im Gelhalter (21) übereinstimmt.

6. Verfahren gemäss Anspruch 5, **dadurch gekennzeichnet, dass** das Abtrennen des Gelausschnitts (27) aus dem Gel durch Auflegen des Gelschneiders (11) auf das Gel durchgeführt wird.

7. Verfahren gemäss einem der Ansprüche 1 bis 6, wobei das Gel bereits vor dem Schneiden des Gelausschnitts (27) in der Äquilibrierflüssigkeit (31) gelagert wird.

8. Verfahren gemäss einem der Ansprüche 1 bis 7, wobei in der Kammer (24) des Gelhalters (21), welcher den Gelausschnitt (27) enthält, mindestens soviel Äquilibrierflüssigkeit (31) gegeben wird, dass sich über dem Gelausschnitt (27) eine Äquilibrierflüssigkeit-Schicht ausbildet, welche die ganze Oberfläche des Gelausschnitts (27) deckt.

9. Gelhalter zur Durchführung des Verfahrens gemäss einem der Ansprüche 1 bis 8, **dadurch gekennzeichnet, dass** er ein Unterteil (29) und ein rahmenförmiges Oberteil (25) umfasst, wobei das Unterteil (29) eine Kammer (24) mit einer Bodenfläche aufweist, welche zur Aufnahme eines plattenförmigen Gelausschnittes (27) ausgebildet ist, und das Oberteil (25) ein Klemmteil (26) aufweist, das bei auf dem Unterteil (29) aufgesetztem Oberteil (25) in die Kammer (24) derart hineinragt, dass ein in der Kammer (24) befindlicher Gelausschnitt (27) am Rande zwischen dem Klemmteil (26) und der Bodenfläche der Kammer (24) eingeklemmt ist.

10. Gelhalter gemäss Anspruch 9, **dadurch gekennzeichnet, dass** das Unterteil (29) einen Boden aufweist, der wenigstens zum Teil aus einem Material besteht, das für eine Strahlung, insbesondere Licht, transparent ist, die zur Detektion von Anreicherungspunkten in einem Gelausschnitt (27), der im Gelhalter (21) eingelegt ist, verwendbar ist.

11. Gelhalter gemäss Anspruch 9 oder 10, **dadurch gekennzeichnet, dass** das Klemmteil (26) eine Leiste ist, die im Wesentlichen komplementär zur Kontur der Kammer (24) ausgebildet ist, so dass das Klemmteil (26) an den Seitenwänden, welche die Kammer (24) begrenzen, gleitend oder mit geringem Spiel in die Kammer (24) absenkbar ist, so dass sich die Klemmwirkung des Klemmteils (26) linienförmig am Rand (28) eines im Unterteil (29) angeordneten Gelausschnittes (27) einstellt.

12. Gelschneider zur Durchführung des Verfahrens gemäss einem der Ansprüche 1 bis 8, **dadurch gekennzeichnet, dass** er eine Schneidekante (18) aufweist, deren Kontur einer vorgegebenen Kontur eines aus dem Gel abzutrennenden Gelausschnitts (27) entspricht, so dass der Gelausschnitt (27) durch Hindurchdrücken der Schneidkante (18) durch das Gel herausschneidbar ist, wobei der Gelausschnitt (27) eine Dicke hat, die viel kleiner als der Umfang des Gelausschnitts (27) ist, und der Umfang des Gelausschnitts (27) genau oder wenigstens annähernd mit dem vorgegebenen Umfang einer Aufnahmestelle in einem Gelhalter übereinstimmt.

13. Gelschneider gemäss Anspruch 12, **dadurch gekennzeichnet, dass** die Schneidkante (18) als eine scharfe Kante eines Bandes (16) oder einer Umrandung aus mindestens zwei streifenförmigen Elementen ausgebildet ist, die an der Aussenfläche (14) einer Erhebung (13) eng anliegend angebracht sind, wobei die Aussenfläche (14) der Erhebung (13) die Schneidelinie der Schneidkante (18) definiert.

14. Gelschneider gemäss Anspruch 13, wobei das Band (16) bzw. die streifenförmigen Elemente aus Metall, Keramik, Glas oder Kunststoff bestehen.

15. Verfahren zum Abtrennen und Entfernen von Gelstücken aus einem Gelausschnitt (27), der sich zusammen mit einer Äquilibrierflüssigkeit (31) in einem Gelhalter (21) befindet,
**dadurch gekennzeichnet, dass**
(a) sich oberhalb als auch unterhalb des Gelausschnitts (27) zumindest im Bereich der zu entfernenden Stücke eine Schicht Äquilibrierflüssigkeit (31) befindet,
(b) ein rohrförmiges Entnahmemittel (66) mit seinem eine Öffnung aufweisenden Ende (83) durch den Gelausschnitt (27) hindurchgestossen wird, wodurch ein Gelstück (69) ausgestochen wird, und danach durch Erzeugen von Unterdruck im Entnahmemittel (66) das ausgestochene Gelstück (69) und nachfolgende Äquilibrierflüssigkeit (31) in das Entnahmemittel (66) eingesaugt wird, so dass das Gelstück (69) von der Öffnung (83) des Entnahmemittels (66) durch eine Säule der Äquilibrierflüssigkeit (31) getrennt ist.

16. Verfahren gemäss Anspruch 15, **dadurch gekennzeichnet, dass** sich über dem Gelausschnitt (27) eine Schicht der Äquilibrierflüssigkeit (31) befindet, so dass beim Durchstossen des Entnahmemittels (66) durch den Gelausschnitt (27) zunächst eine kurze Flüssigkeitssäule der Äquilibrierflüssigkeit (31) in dem Entnahmemittel (66) aufgenommen wird, wodurch nach dem Abtrennen eines Gelstückes (69) auch oberhalb des Gelstückes (69) im Entnahmemittel (66) eine Schicht der Äquilibrierflüssigkeit (31) vorhanden ist.

17. Verfahren gemäss Anspruch 15 oder 16, **dadurch gekennzeichnet, dass** vor dem Abtrennen der Gelstücke (69) die Orte auf dem Gelausschnitt(27) festgelegt werden, wo die abzutrennenden Gelstücke (69) liegen, der Gelhalter (21) in eine Entnahmevorrichtung mit mindestens einer Entnahmeeinrichtung (51) mit einem Entnahmemittel (66) eingesetzt wird und die Entnahmeeinrichtung (51) an die vorbestimmten Orte auf dem Gelausschnitt (27) positioniert und dann das Abtrennen der Gelstücke (69) mittels der Entnahmeeinrichtung (51) durchgeführt wird.

18. Verfahren gemäss einem der Ansprüche 15 bis 17, **dadurch gekennzeichnet, dass** ein abgetrenntes Gelstück (69) aus dem Entnahmemittel (66) durch Erzeugen von Überdruck im Entnahmemittel (66) ausgestossen wird.

19. Verfahren gemäss einem der Ansprüche 15 bis 18, **dadurch gekennzeichnet, dass** der Gelhalter (21) ein Unterteil (29) und ein Oberteil (25) umfasst, wobei das Unterteil eine Kammer (24) mit einer Bodenfläche aufweist, welche zur Aufnahme eines plattenförmigen Gelausschnittes (27) ausgebildet ist, und das Oberteil (25) ein Klemmteil (26) aufweist, das bei auf dem Unterteil (29) aufgesetztem Oberteil (25) in die Kammer (24) derart hineinragt, dass ein in der Kammer (24) befindlicher Gelausschnitt (27) am Rande zwischen dem Klemmteil (26) und der Bodenfläche der Kammer (24) eingeklemmt ist.

20. Entnahmeeinrichtung zum Abtrennen und Entfernen eines Gelstückes (69) aus einem Gelausschnitt (27) zur Durchführung des Verfahrens gemäss einem der Ansprüche 15 bis 19, **dadurch gekennzeichnet, dass** sie folgende Komponenten enthält:
(a) ein im Wesentlichen rohrförmiges Entnahmemittel (66), das in einem Träger (53) längsbeweglich angeordnet ist und dessen eines dem Abtrennen dienenden Ende (83) als Ausstechmittel ausgebildet ist, und
(b) eine Feder (68), die sich am Träger (53) und am Entnahmemittel (66) derart abstützt, dass das Entnahmemittel (66) gegen die Rückstellkraft der Feder (68) aus seiner Ruhelage herausbewegbar ist.

21. Entnahmeeinrichtung gemäss Anspruch 20, **dadurch gekennzeichnet, dass** das Ende (83) des Entnahmemittels (66) in dessen Ruhelage am Weitesten aus dem Träger (53) vorsteht.

22. Vorrichtung zum Analysieren vorbestimmter Bereiche eines Gelausschnittes, insbesondere von Anreicherungspunkten nach Durchführen einer Gemischtrennung in einem Gel,
**dadurch gekennzeichnet, dass** sie folgende Komponenten umfasst:
(a) eine erste Vorrichtung, in welche einen Gelhalter (21) zur Aufnahme eines Gelausschnittes (27) einsetzbar ist und welche über Mittel verfügt, um die zu analysierenden Bereiche des Gelausschnittes (27) zu detektieren und/oder eine Darstellung des Gelausschnittes (27) zu erstellen, in der die für die Analyse in Frage kommende Bereiche erkennbar sind, wobei die erste Vorrichtung Mittel zum Markieren der zu analysierenden Bereiche auf einer elektronisch erzeugten Abbildung des Gelausschnittes (27) enthält, und wobei im Gelhalter (21) das Gelausschnitt (27) in Kontakt mit einer Äquilibrierflüssigkeit (31) ist; und
(b) eine zweite Vorrichtung, welche zum Abtrennen und Entfernen eines Stückes (69) aus einem Gelausschnitt (27) dient, mit einer Aufnahmestelle für den Gelhalter (21) und mit Transportmitteln, um eine Entnahmeeinrichtung (51), welche zum Abtrennen und Entfernen eines Stückes (69) aus einem Gelausschnitt (27) dient,
über die ausgewählten zu entnehmenden Bereiche des Gelausschnittes (27) im Gelhalter (21) zu positionieren und sie zum Gelausschnitt (27) hin zu bewegen, so dass Entnahmemittel (66) jeweils an einem vorgegebenen Ort durch den Gelausschnitt (27) hindurchgetrieben werden kann, um ein Gelstück (69) aufzunehmen.

23. Vorrichtung gemäss Anspruch 22, **dadurch gekennzeichnet, dass**, die Entnahmemittel (66) mit einer Vorrichtung zum Erzeugen von Unterdruck und Überdruck verbunden ist, so dass durch Unterdruck im Entnahmemittel (66) ein durch das Entnahmemittel (66) abgetrenntes Gelstück (69) in das Entnahmemittel (66) einsaugbar und nach dem Gelstück (69) noch eine bestimmte Menge Äquilibrierflüssigkeit (31), die das Gelstück (69) umgibt, nachsaugbar ist, und durch Erzeugen eines Überdrucks im Entnahmemittel (66) das mit dem Entnahmemittel (66) aufgenommene Material, insbesondere das Gelstück (69), wieder aus dem Entnahmemittel (66) ausstossbar ist.

24. Vorrichtung gemäss Anspruch 22 oder 23, **dadurch gekennzeichnet, dass**, der Gelhalter (21) ein Unterteil (29) und ein Oberteil (25) umfasst, wobei das Unterteil (29) eine Kammer (24) aufweist, die eine Bodenfläche hat und zur Aufnahme eines plattenförmigen Gelausschnittes (27) ausgebildet ist, und das Oberteil (25) ein Klemmteil (26) aufweist, das bei auf dem Unterteil (29) aufgesetztem Oberteil (25) in die Kammer (24) derart hineinragt, dass ein in der Kammer (24) befindlicher Gelausschnitt (27) am Rande zwischen dem Klemmteil (26) und der Bodenfläche der Kammer (24) eingeklemmt ist.

25. Vorrichtung gemäss einem der Ansprüche 22 bis 24, **dadurch gekennzeichnet, dass**, die zweite Vorrichtung (51) folgende Komponenten enthält:
(a) ein im Wesentlichen rohrförmiges Entnahmemittel (66) , das in einem Träger (53) längsbeweglich angeordnet ist und dessen eines dem Abtrennen dienenden Ende (83) als Ausstechmittel ausgebildet ist, und
(b) eine Feder (68), die sich am Träger (53) und am Entnahmemittel (66) derart abstützt, dass das Entnahmemittel (66) gegen die Rückstellkraft der Feder (68) aus seiner Ruhelage herausbewegbar ist.
